# EUROPÄISCHE PATENTSCHRIFT

(11) **EP 1 154 221 B1**
(45) Veröffentlichungstag und Bekanntmachung des Hinweises auf die Patenterteilung: **25.04.2007**
(21) Anmeldenummer: 00128752.3
(22) Anmeldetag: 30.12.2000
(51) Int. Cl.: F41G 3/26, G01S 17/74

(54) **System und Verfahren zur Simulation von Schüssen**
System and method for simulation of firing
Système et méthode pour simulation de tir

(30) Priorität: 12.05.2000 CH 9442000
(43) Veröffentlichungstag der Anmeldung: 14.11.2001
(73) Patentinhaber: OERLIKON CONTRAVES AG, 8050 Zürich (CH)
(72) Erfinder: Gerber, Peter, 8965 Berikon (CH); Ochsner, Fabian, 5415 Nussbaumen (CH)
(74) Vertreter: OK pat AG

(56) Entgegenhaltungen:
- EP-A- 0 254 197
- EP-A- 0 836 068
- EP-A- 0 836 069
- EP-A- 0 859 243
- DE-A- 3 545 829
- DE-B- 2 846 962

## Beschreibung

Die vorliegende Erfindung betrifft ein System und ein Verfahren zur Simulation von Schüssen.

Aus der europäischen Patentanmeldung EP-0 859 243-A ist ein Laseridentifikations/Simulationssystem mit einem Lasergerät zur Identifizierung einer Respondervorrichtung bekannt. Das Interrogationssystem ist ausgebildet, um einen codierten Laserstrahl auszusenden, wobei die Respondervorrichtung Sensor-Mittel zur Detektierung dieses Laserstrahls und zur Umwandlung desselben in elektrische Signale aufweist, die einer Auswerteeinheit zugeführt werden, sowie Sender-Mittel, um nach Massgabe von in der Auswerteeinheit getroffenen Entscheidungen Meldungen an Empfänger-Mittel, die sich innerhalb oder ausserhalb des Lasergeräts befinden, zurückzusenden. Dieses Lasergerät ist ausgestaltet, um eine eng gebündelte Laserstrahlung auszusenden.
Ein solches System wird an Waffen montiert, die normalerweise von Soldaten getragen werden, wobei alle Teilnehmer an einer Übung, sowohl Personen wie Objekte, mit Detektoren ausgestaltet sind, die eine mögliche Waffenwirkung auf den Teilnehmer registrieren. Die Wirkungsweise solcher bekannten Systeme, beispielsweise des sogenannten SIMLAS, ergibt sich aus den technischen Merkmalen eines Freund-Feind-Erkennungssystems, das auch nach der vorliegenden Erfindung angewendet werden kann.

Aus der DE-28 46 962-B ist eine Vorrichtung zur Messung der Entfernung zwischen zwei Gegenständen bekannt, wie sie einen Teil des Identifikationssystems bildet, das seinerseits wieder ein Teil des Simulationssystems der Erfindung darstellt.

Aus der EP-0 836 068-A und der EP-0 254 197 sind ähnliche Kommunikations-, Identifikations- bzw. Simulationssysteme zu militärischen Verwendungszwecken bekannt, jedoch ist in keinem Falle vorgesehen, eine Bewegung des Zieles durch einhalten eines Vorhaltewinkels zu berücksichtigen.

Es ist nun Aufgabe der vorliegenden Erfindung,
- ein System zur Simulation eines Schusses mit richtiger Munition zu schaffen, das wenig aufwendig ist und das ein sicheres Visieren mit Vorhaltewinkel gestattet, sowie
- ein Verfahren zur Simulation eines Schusses mit richtiger Munition bei Verwendung des neuen Systems vorzuschlagen.

Diese Aufgabe wird in vorteilhafter Weise erfindungsgemäss gelöst
- für das System nach Patentanspruch 1, und
- für das Verfahren nach Patentanspruch 8.

Andere vorteilhafte Ausführungen des erfindungsgemässen Systems ergeben sich aus den abhängigen Ansprüchen 2 bis 7.

Die Erfindung wird nachfolgend beispielhaft an Hand von Zeichnungen näher erläutert. In schematischer Darstellung zeigen:
- Fig. 1: eine Interrogationsvorrichtung bzw. Sendevorrichtung nach der Erfindung,
- Fig. 2: eine Respondervorrichtung bzw. Empfangseinrichtung nach der Erfindung,
- Fig. 3: ein Diagramm zur Erläuterung einiger Informationssignale,
- Fig. 4: eine Antennenvorrichtung, und
- Fig. 5: ein Diagramm zur Erläuterung der Arbeitsweise des Identifikations- und Simulationssystems nach der Erfindung.

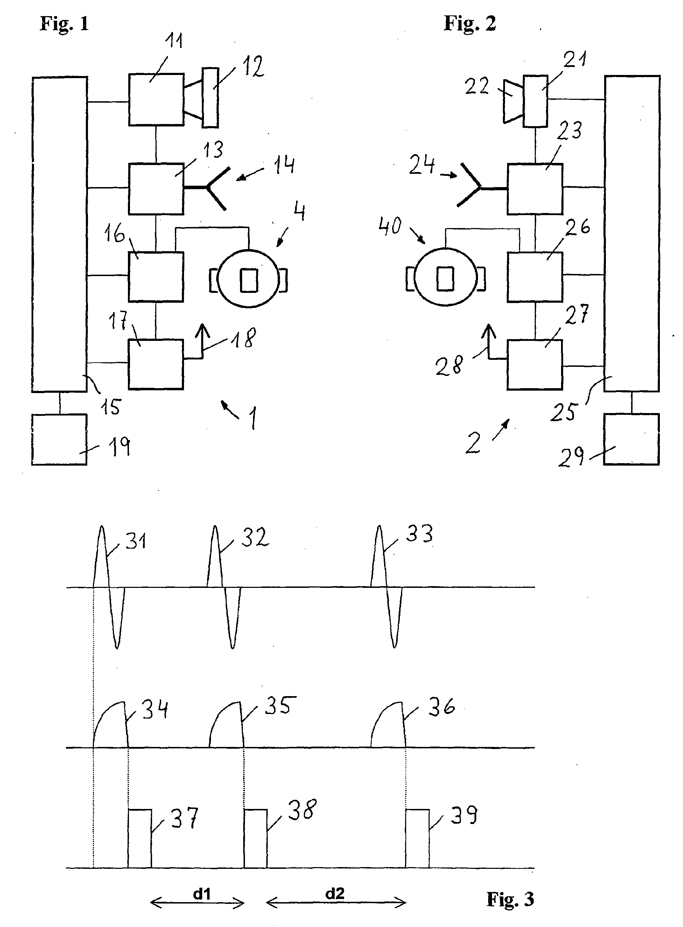

Eine Interrogationsvorrichtung 1 nach Fig. 1 umfasst einen auf einer Waffe montierbaren oder montierten Laser-Sender 11 mit einem Laserstrahler 12, der in den Sender 11 integriert sein kann, eine auf dieser Waffe oder einem anderen Objekt derselben Einrichtung montierbare oder montierte Vorrichtung 13 mit einer Antenne 14, die in die Vorrichtung 13 integriert sein kann, und eine Zentraleinheit 15. An die Zentraleinheit 15 können je eine Hilfsvorrichtung 16 und 17 angeschlossen sein. Mit den Hilfsvorrichtungen 16 und 17 ist je eine Antenne bzw. Antennenvorrichtung 4 bzw. 18 verbunden. Vorzugsweise ist die Hilfsvorrichtung 17 ein RF-System und die Antennenvorrichtung 18 eine RF-Antenne.

Die Respondervorrichtung 2 nach Fig. 2 umfasst einen Laser-Empfänger 21 mit mindestens einem Laserdetektor 22, der in den Empfänger 21 integriert sein kann, eine Vorrichtung 23 mit einer Antenne 24, die in die Vorrichtung 23 integriert sein kann, und eine Zentraleinheit RF-Antenne. Mit den Zentraleinheiten 15 und 25 kann auch mindestens je ein Endgerät 19 bzw. 29 verbunden sein, das beispielsweise mit einer Tastatur und/oder einem Display und/oder einem Kopfhörer und/oder einem Mikrophon versehen sein kann.

In Fig. 3, die sich auf die Vorrichtung 13 mit der Antenne 14 bezieht, sind beispielsweise drei Impulse 31, 32, 33 in der Grössenordnung von Pikosekunden dargestellt. Dies entspricht einer Schwingungsfrequenz von 10 bis 1000 GHz und einer Wellenlänge von 30 bis 0.3 mm. Die Antenne 14 kann relativ kleine Dimensionen aufweisen und lässt sich dadurch an die Waffe montieren. Von einem Endgerät 19 gelieferte Signale bewirken, dass die Zentraleinheit 15 eine Modulation und/oder Codierung der Steuersignale für die als Sender arbeitende Vorrichtung 13 veranlasst, derart, dass die Impulse 31, 32, 33 gegebenenfalls in unterschiedlichen Abständen ausgelöst werden. Diese Impulse beinhalten im letzten Fall die zu übertragende Information (z.B. eine Aufforderung an eine Respondervorrichtung sich zu erkennen zu geben). Durch eine spezielle Ausführung und Dimensionierung der Antenne 14, kann man erreichen, das kurze, gerichtete (gebündelte) Impulse 31, 32, 33 übertragen werden.

Die Abstrahlcharakteristik der Sendeeinrichtung 13, 14 kann durch Anpassung bzw. Änderung der Antenne je nach Wunsch verschieden stark gebündelt werden. Durch eine geeignete Antenne kann man einen Winkel der Strahlungskeule von etwa 30 mrad erzielen.

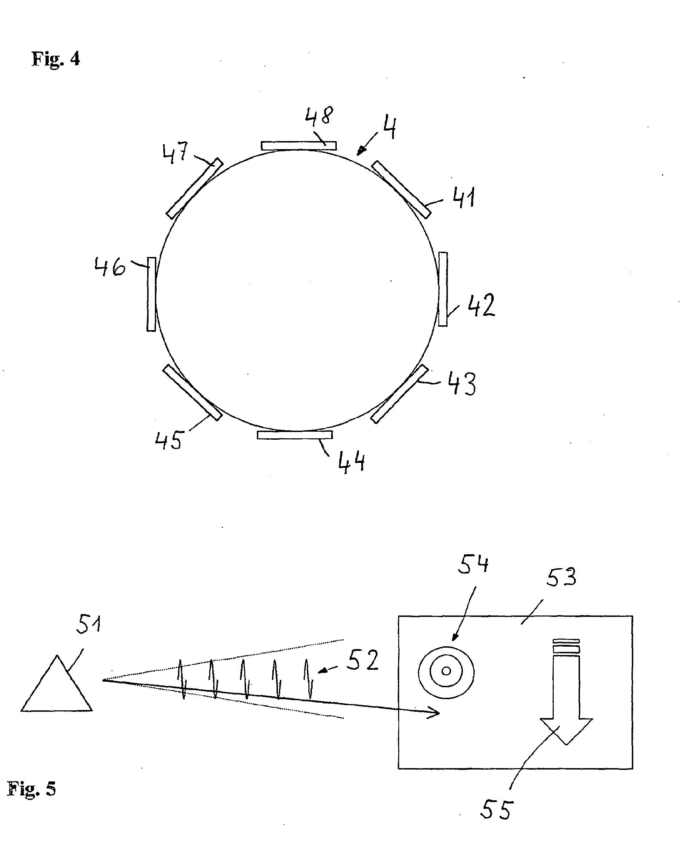

Die Antennenvorrichtung 4 kann eine omnidirektionale Antenne sein oder aus einer Anzahl, vorzugsweise zwischen vier und acht Flachantennen, bestehen. Fig. 4 zeigt in welcher Form beispielsweise acht Flachantennen 41 bis 48 peripher an einem Helm angeordnet sein können, während für einen Panzer oder andere grössere Einrichtungen eine omnidirektionale Antenne vorteilhaft sein kann.

Fig. 5 zeigt schematisch eine Schiess- oder Sendeeinrichtung 51, die vorzugsweise einzelne elektromagnetische oder Laserimpulse 52 sendet, und eine Respondervorrichtung 53 mit einem Ziel 54. Der Pfeil 55 stellt einen Hinweis auf die durch die Schwerkraft bedingte relative Bewegung der richtigen Munition dar.

Zur Realisierung der Erfindung muss weder die Sendeeinrichtung 1 noch die Respondervorrichtung 2 alle in den Figuren 1 und 2 angegebenen Elemente aufweisen. In der Sendeeinrichtung 1 sind neben der Zentraleinheit 15 und mindestens einem Endgerät 19 nur die Elemente 11, 12 oder 13, 14 oder 16, 4 oder 17, 18 bzw. in der Respondervorrichtung 2 neben der Zentraleinheit 25 und mindestens einem Endgerät 29 nur die Elemente 21, 22 oder 23, 24 oder 26, 40 oder 27, 28 für die Simulationszwecke nach der Erfindung notwendig. Zum Zielen mit einer Waffe können die Elemente 11, 12 oder 13, 14 in der Sendeeinrichtung 1 bzw. die Elemente 21, 22 oder 24, 23 in der Respondervorrichtung 2 verwendet werden. Für die Identifikation sind insbesondere die Elemente 17, 18 bzw. 27, 28 vorgesehen.

Das erfindungsgemässe Simulationssystem funktioniert nun folgendermassen:
Die beispielsweise an einer Übung beteiligten Personen können mindestens einen der angegebenen Sensoren vorzugsweise mit Hilfe eines Gurtsystems nach der europäischen Patentanmeldung EP 0 859 243 A1 und/oder EP 0 836 068 A1 und/oder EP 0 836 069 A1 auf sich tragen. Im übrigen kann der Gegenstand der vorliegenden Erfindung, die auch für Objekte, wie Gewehre, Kanonen, Panzer usw. geeignet ist, alle in den Patentanmeldungen gezeigten Mittel umfassen, um alle aus diesen Patentanmeldungen bekannten Funktionen in gleicher oder ähnlicher Weise zu realisieren.

Nach einer ersten Ausführung der Erfindung werden in der Respondervorrichtung 2 die über die als Empfänger arbeitende Vorrichtung 23 mit der Antenne oder dem Sensor 24 empfangenen Impulse 31, 32, 33 (Fig. 3), die zeitlich moduliert sind, empfangen und vorzugsweise auch verstärkt. Aus den empfangenen Impulsen 34, 35, 36 können dann Informationsimpulse 37, 38, 39 erzeugt werden, die ohne länger als die Impulse 31, 32, 33 , oder zeitverschoben sein können. In der Zentraleinheit 25 wird die durch die unterschiedlichen Abstände d1, d2 zwischen den Impulsen codiert übertragene Information entziffert und in elektrisch geeigneter Form mindestens einem der Endgeräte 29 zugeführt. Die somit als Respondervorrichtung arbeitende Empfangseinrichtung 2 kann ausgebildet sein, um beispielsweise über die als Sender arbeitende Hilfsvorrichtung 26 oder 27 elektromagnetische Echosignale auszusenden, die von den als Empfänger arbeitenden Hilfsvorrichtungen 4, 16 oder 18, 17 der Interrogationsvorrichtung 1 nach Fig. 1 empfangen werden, um eine Distanzmessung zwischen der Interrogationsvorrichtung 1 und der Respondervorrichtung 2 durchzuführen. Die zeitlich modulierten Impulse werden speziell für die Identifizierung verwendet. Für die Simulation können zum Beispiel Impulse verwendet werden, die nicht zeitlich moduliert sind. Der Schütze zielt mit der elektromagnetischen Strahlung aus der Antenne 14 nicht direkt auf das Ziel 54 (Fig. 5), sondern mit Vorhalt, als ob er mit richtigen Munition schiessen würde. Er drückt zwar ab, aber die elektromagnetische Strahlung wird zunächst noch nicht gestartet. Zuerst werden nur die kurzen Impulse ausgesendet, die von der Respondervorrichtung 2 empfangen und zurück zur Interrogationsvorrichtung 1 übermittelt werden, wo mit deren Hilfe die Distanz und gegebenenfalls die Bewegung des Zieles vermessen werden. Erst nach einer Verzögerungszeit Δt wird die elektromagnetische Strahlung von der Antenne 14 ausgelöst, und, wenn der Schütze das Gerät wirklich in der im voraus berechneten Position hält, trifft die elektromagnetische Strahlung genau das anvisierte Ziel. Die Erfindung beruht auf der Erkenntnis, dass die Impulse sich schneller zum Ziel ausbreiten, als die richtige Munition zwischen Waffe und Ziel fliegt. Bei den entsprechenden Berechnungen kann die Zentraleinheit 15 die Verzögerungszeiten berücksichtigen. Die Verzögerungszeit Δt kann beispielsweise in der Grössenordnung von 100 bis 150 msec liegen.

Nach einer zweiten Ausführung der Erfindung wird über den Laserstrahler 12 (Fig. 1) ein modulierter Laserpuls, beispielsweise in der Grössenordnung von 100 msec geschossen. In dem Responder 2 werden die über die als Laser-Empfänger arbeitende Vorrichtung 21 mit der Antenne oder dem Sensor 22 empfangenen modulierten Laser-Impulse detektiert und in elektrische Signale umgewandelt. In der Zentraleinheit 25 wird die codiert übertragene Information entziffert und in elektrisch geeigneter Form mindestens einem der Endgeräte 29 zugeführt. Die Respondervorrichtung 2 kann so ausgebildet sein, dass beispielsweise über die als Sender arbeitende Hilfsvorrichtung 26 oder 27 elektromagnetische Antwortsignale ausgesendet werden, die von den als Empfänger arbeitenden Hilfsvorrichtungen 4, 16 oder 18, 17 der Interrogationsvorrichtung 1 nach Fig. 1 empfangen werden, um eine Distanzmessung zwischen der Interrogationsvorrichtung 1 und der Respondervorrichtung 2 durchzuführen. Die modulierten Laser-Impulse werden speziell für die Identifikation verwendet. Für die Simulation, das heisst für die Messung der Distanz bzw. der Bewegung können Laser-Impulse oder über die Antenne 14 ausgestrahlte elektromagnetische Impulse (z.B. RF) oder auch über die Antenne 18 ausgestrahlte Radiowellenimpulse verwendet werden. Der Schütze zielt mit dem Laserstrahl aus der Laseroptik 12 nicht direkt auf das Ziel 54, sondern mit Vorhalt, als ob er mit scharfer Munition schiessen würde. Er drückt zwar ab, aber der Laserstrahl wird zunächst noch nicht gestartet. Zuerst werden nur die speziellen Impulse ausgesendet, die von der Respondervorrichtung 2 empfangen und zurück zur Interrogationsvorrichtung 1 übermittelt werden, wo mit deren Hilfe die Distanz und gegebenenfalls die Bewegung des Zieles vermessen werden. Wie bei der ersten Ausführung wird erst nach einer Verzögerungszeit Δt der Laserstrahl ausgelöst.

Vorzugsweise wird somit ein modulierter Laserpuls in der Grössenordnung von 100 msec geschossen. Der Schütze zielt mit dem Laser nicht direkt auf das Ziel 54, sondern mit Vorhalt, als ob er mit richtiger Munition schiessen würde. Wenn er abdrückt, löst sich jedoch kein Laser-Schuss. Zuerst werden nur die kurzen Pulse im Gigafrequenzbereich, beispielsweise zwischen 10 und 1000 GHZ ausgesendet, damit die Distanz und die Bewegung vermessen werden können. Diese Information wird von der Respondervorrichtung an den Schützen mit den gleichen kurzen Pulsen zurück übermittelt und elektronisch ausgewertet. Nach einer vorbestimmte Zeit, beispielsweise ≥100 msec, wird der Laser-Schuss ausgelöst, so dass, wenn der Schütze wirklich in der voraus berechneten Position ist, der Laserstrahl das Ziel trifft.

Als Antennen 14 und 24 können beispielsweise Flachantenne dienen, die an einem Helm befestigbar sind. Eine Antenne kann beispielsweise in Form eines Trapezes mit Basis = 20 bis 40 mm, kleine Seite = 5 bis 15 mm und Höhe = 30 bis 50 mm ausgebildet sein. Statt der einzelnen Impulse 31, 32, 33 können auch Pakete von gegebenenfalls gedämpften und/oder harmonischen und/oder anharmonischen Impulsen ausgesendet werden. Der Lasersender kann ein 820 nm CW Laser mit einer Leistung in der Grössenordnung von 20 bis 60 mW sein.

Das erfindungsgemässe System kann daher auch in einem Verfahren verwendet werden, bei dem ein modulierter Laserpuls aus einem Lasersender nicht direkt auf die Respondervorrichtung, sondern mit Vorhalt geschossen wird, als ob man richtige Munition verwenden würde, wobei beim Abdrücken sich zunächst kein Laser-Schuss auslöst, sondern zuerst nur kurze Pulse ausgesendet werden, die zur Messung der Distanz und gegebenenfalls auch der Bewegung dienen, wobei diese Information vom Ziel an den Lasersender ebenfalls mit kurzen Pulsen zurück übermittelt und elektronisch ausgewertet wird, und wobei nach einer vorbestimmten Zeit der Laser-Schuss ausgelöst wird, so dass wenn sich der Lasersender wirklich in der voraus berechneten Position befindet, der Laserstrahl das Ziel trifft. Dabei können die zur Simulation eines Schusses verwendeten kurzen Pulse Laserpulse bzw. Laserimpulse oder elektromagnetische Pulse oder einzelne Impulse oder Pakete von Impulsen sein.

Das erfindungsgemässe Simulationssystem kann ebenfalls zur Simulation eines Schusses mit Hilfe einer Sendeeinrichtung 1 verwendet werden. Dabei wird zur Identifizierung einer Respondervorrichtung 2 eine codierte Strahlung ausgesendet, die in der Respondervorrichtung detektiert und in elektrische Signale umgewandelt wird, die einer empfangsseitigen Zentraleinheit 25 zugeführt werden, um nach Massgabe von in dieser Zentraleinheit 25 getroffenen Entscheidungen Identifikations-Meldungen an die Sendeeinrichtung 1 zurückzusenden, wobei die Sendeeinrichtung 1 elektromagnetische Impulse oder Pakete von Impulsen erzeugt, die derart eine codierte Information beinhalten, dass die Antwortimpulse, die die Respondervorrichtung 2 auf Grund dieser Information an die Sendeeinrichtung 1 zurücksendet, eine sendeseitige Zentraleinheit 15 zusätzlich befähigen, aus den Antwortimpulsen die Entfernung zwischen der Interrogationsvorrichtung und der Respondervorrichtung und gegebenenfalls auch eine Bewegung der Respondervorrichtung zu berechnen, um daraus die Bedingungen, die sich bei Verwendung einer richtigen Munition ergeben würden, zu simulieren.

## Patentansprüche

1. System (1, 2) zur Simulation, mit einer Interrogationsvorrichtung (1) zur Identifikation einer Respondervorrichtung (2), wobei
- die Interrogationsvorrichtung (1) ausgebildet ist, um eine codierte Strahlung auszusenden, und
- die Respondervorrichtung (2)
- Sensor-Mittel (21, 22 oder 23, 24)
- zur Detektierung dieser Strahlung und
- zur Umwandlung derselben in elektrische Signale umfasst, die einer empfangsseitigen Zentraleinheit (25) zuführbar sind, sowie
- Sender-Mittel (26, 40 oder 27, 28 oder 23, 24) aufweist, um nach Massgabe von der Zentraleinheit (25) getroffenen Entscheidungen Meldungen zurückzusenden an Empfängermittel 4, 16 oder 18, 17 oder 14, 13), die sich innerhalb oder ausserhalb der Interrogationsvorrichtung (1) befinden, welche Sender-Mittel (26, 40 oder 27, 28 oder 23, 24) der Respondervorrichtung (2) ausgebildet sind, um aus der empfangenen Strahlung abgeleitete Antwortimpulse an die Interrogationsvorrichtung (1) zurückzusenden,
**dadurch gekennzeichnet,**
- **dass** die Interrogationsvorrichtung (1) eine sendeseitige Zentraleinheit (15) umfasst, die ausgebildet ist, um aus diesen Antwortimpulsen die Entfernung zwischen der Interrogationsvorrichtung (1) und der Respondervorrichtung (2) zu berechnen, um daraus Bedingungen zu ermitteln, die sich bei einem Schuss unter Verwendung einer richtigen Munition ergeben würden, wobei die Bedingungen einen Vorhalt oder Vorhaltwinkel und/oder einen ballistischen Winkel umfassen, und
- **dass** Mittel (13, 14; 24, 23) vorhanden sind, um eine elektrische Strahlung mit einzelnen Impulsen oder kurzen Pulsen zu Zwecken der Simulation des Schusses auszusenden.

2. System (1, 2) nach Anspruch 1,
**dadurch gekennzeichnet,**
**dass** die Mittel (13, 14; 22, 21) für eine Identifikation mittels Laserstrahlen ausgebildet sind.

3. System (1, 2) nach Anspruch **1,**
**dadurch gekennzeichnet,**
**dass** die Mittel (13, 14; 24, 23) zum Verwenden der elektromagnetischen Strahlung mit einzelnen Impulsen oder kurzen Pulsen zeitlich modulierbare Impulse oder Pulse für die Identifikation verwenden.

4. System (1, 2) nach einem der Ansprüche 1 bis 3,
**dadurch gekennzeichnet,**
**dass** die sendeseitige Zentraleinheit (15) ausgebildet ist, um aus den Antwortimpulsen auch eine mögliche Bewegung der Respondervorrichtung (2) rechnerisch zu erfassen.

5. System (1, 2) nach einem der Ansprüche 1 bis 4,
**dadurch gekennzeichnet,**
**dass** Mittel vorhanden sind, um mindestens ein Teil der empfangenen codierten Strahlung, die von der Interrogationsvorrichtung (1) für Zwecke der Identifikation ausgesendet wird, als abgeleitete Antwortimpulse für die Simulation an die Interrogationsvorrichtung (1) zurückzusenden.

6. System (1, 2) nach einem der Ansprüche 1 bis 5,
**dadurch gekennzeichnet,**
- **dass** für die Simulation und für die Identifikation ein und dieselbe Antenne (18; 28) verwendet wird, oder
- **dass** für die Identifikation eine Funkantenne (18; 28) und für die Simulation eine omnidirektionale oder quasi-omnidirektionale Antenne (4; 40) verwendet wird.

7. System (1, 2) nach einem der Ansprüche 1 bis 6,
**dadurch gekennzeichnet,**
**dass** mindestens die Sensor-Mittel (22, 21; 24; 23) der Respondervorrichtung (2) ausgebildet sind, um in ein tragbares Gurtsystem aufgenommen zu werden.

8. Verfahren zur Simulation eines Schusses unter Verwendung eines Simulationssystems (1, 2) nach Anspruch **1,** mit einer Interrogationsvorrichtung (1) und einer Respondervorrichtung (2),
**dadurch gekennzeichnet,**
**dass** die Interrogationsvorrichtung (1) elektromagnetische Impulse oder Pakete von Impulsen erzeugt, die derart eine codierte Information beinhalten, dass Antwortimpulse, welche die Respondervorrichtung (2) auf Grund dieser Information an die Interrogationsvorrichtung (1) zurücksendet, zur Identifikation der Respondervorrichtung und zusätzlich dazu benutzt werden, um aus diesen Antwortimpulsen die Entfernung zwischen der Interrogationsvorrichtung (1) und die Respondervorrichtung (2) zu berechnen, um daraus Bedingungen zu ermitteln, die sich bei einer Verwendung richtiger Munition für den Schuss ergeben würden, wobei die Antwortimpulse zusätzlich benutzt werden, um auch eine mögliche Bewegung der Respondervorrichtung rechnerisch zu erfassen und die ermittelten Bedingungen einen Vorhalt und/oder Vorhaltewinkel und/oder ballistische Winkel umfassen.

## Claims

1. A system (1, 2) for simulation, with an interrogation device (1) to identify a responder device (2), whereby
- the interrogation device (1) is designed to emit a coded radiation, and
- the responder device (2) exhibits
- sensor means (21, 22 or 23, 24)
- to detect this beam and
- to convert said radiation into electric signals that can be applied to a central processor unit (25) at a receiving end, and
- transmitter means (26, 40 or 27, 28 or 23, 24) to send messages, according to decisions made by the central processor unit (25), back to receiver means (4, 16 or 18, 17 or 14, 13) located within or outside the interrogation device (1), said transmitter means (26, 40 or 27, 28 or 23, 24) of the responder device (2) being designed to send response impulses derived from the received radiation back to the interrogation device (1),
**characterized in that**
- the interrogation device (1) comprises a central processor unit (15) at a transmitting end that is designed to compute the distance between the interrogation device (1) and the responder device (2) from said response pulses to determine thereof conditions that would result when firing real ammunition, whereby the conditions comprise a lead or lead angle
and/or a ballistic angle, and **in that**
- means (13, 14; 24, 23) are provided to emit an electric radiation with single impulses or short pulses for the purpose of simulating the firing.

2. A system (1, 2) according to claim 1,
**characterized in that**
the means (13, 14; 22, 21) are designed for an identification by laser beams.

3. A system (1, 2) according to claim **1,**
**characterized in that**
the means (13, 14; 24, 23) to use the electromagnetic radiation with single impulses or short pulses use time modulated impulses or pulses for identification.

4. A system (1, 2) according to one of the claims 1 through 3,
**characterized in that**
the central processor unit (15) at the transmitting end is designed to additionally capture by computation a possible movement of the responder device (2) from the response impulses.

5. A system (1, 2) according to one of the claims 1 through 4,
**characterized in that**
means are provided to send back at least part of the received and coded radiation, emitted by the interrogation device (1) for purposes of identification, as derived response impulses for simulation to the interrogation device (1).

6. A system (1, 2) according to one of the claims **1** through **5,**
**characterized in that**
- one and the same antenna (18; 28) is used for simulation and identification, or **in that**
- a radio antenna (18; 28) is used for identification and an omni-directional or quasi-omni-directional antenna (4; 40) for simulation.

7. A system (1, 2) according to one of the claims **1** through **6,**
**characterized in that**
at least the sensor means (22, 21; 24; 23) of the responder device (2) are designed to be held in a portable belt system.

8. A method for simulation of firing a round using a simulation system (1, 2) according to claim 1, with an interrogation device (1) and a responder device (2),
**characterized in that**
the interrogation device (1) generates electromagnetic impulses or packets of pulses that contain coded information in such a way that response impulses sent back to the interrogation device (1) by the responder device (2) on the basis of this information are used for identification of the responder device (2) and are used additionally to compute from these response impulses the distance between the interrogation device (1) and the responder device (2) and to determine thereof conditions that would result when using real ammunition for the round, whereby the response impulses further are used to capture by computation a possible movement of the responder device (2) and the determined conditions comprise a lead and/or lead angle and/or ballistic angles.

## Revendications

1. Système (1,2) de simulation, comportant un dispositif d'interrogation (1) permettant une identification d'un dispositif répondeur (2), dans lequel
- le dispositif d'interrogation (1) est exécuté pour émettre un rayonnement codé, et
- le dispositif répondeur (2) comprend
- des moyens de détection (21, 22 ou 23, 34)
- destinés à détecter ce rayonnement et
- destinés à convertir celui-ci en signaux électriques qui peuvent être amenés à une unité centrale (25) côté réception, ainsi que
- des moyens d'émission (26, 40 ou 27, 28 ou 23, 24) permettant, en fonction des décisions prises par l'unité centrale (25), de renvoyer des messages aux moyens de réception (4, 16, ou 18, 17 ou 14, 13) qui se trouvent à l'intérieur de ou à l'extérieur du dispositif d'interrogation (1), ces moyens d'émission (26, 40 ou 27, 28 ou 23, 24) du dispositif répondeur (2) étant configurés pour renvoyer au dispositif d'interrogation (1) des impulsions de réponse dérivées du rayonnement reçu,
**caractérisé**
- **en ce que** le dispositif d'interrogation (1) comprend une unité centrale (15) côté émission, qui est configurée pour calculer, à partir de ces impulsions de réponse, la distance entre le dispositif d'interrogation (1) et le dispositif répondeur (2) afin de déterminer à partir de celle-ci des conditions qui existeraient lors d'un tir en utilisant une munition réelle, les conditions comportant une correction-but ou un angle de dérive et/ou un angle balistique, et
- **en ce qu'**il existe des moyens (13, 14 ; 24, 23) permettant d'émettre un rayonnement électrique avec des impulsions individuelles ou des suites de brèves impulsions à des fins de simulation du tir.

2. Système (1, 2) selon la revendication **1,**
**caractérisé**
**en ce que** les moyens (13, 14 ; 22, 21) sont conçus pour une identification au moyen de rayons laser.

3. Système (1, 2) selon la revendication 1,
**caractérisé**
**en ce que** les moyens (13, 14 ; 24, 23) pour utiliser le rayonnement électromagnétique avec des impulsions individuelles ou des suites de brèves impulsions utilisent des impulsions ou des suites d'impulsions modulables en temps pour l'identification.

4. Système (1, 2) selon l'une des revendications 1 à 3,
**caractérisé**
**en ce que** l'unité centrale côté émission (15) est conçue pour aussi acquérir par calcul un déplacement possible du dispositif répondeur (2) à partir des impulsions de réponse.

5. Système (1, 2) selon l'une des revendications 1 à 4,
**caractérisé**
**en ce qu'**il existe des moyens pour renvoyer au dispositif d'interrogation (1), pour la simulation, au moins une partie du rayonnement codé reçu, qui est émis par le dispositif d'interrogation (1) à des fins d'identification, en tant qu'impulsions de réponse dérivées.

6. Système (1, 2) selon l'une des revendications 1 à 5,
**caractérisé**
- **en ce que** pour la simulation et pour l'identification, une seule et même antenne (18 ; 28) est utilisée, ou
- **en ce que** pour l'identification, une antenne radio (18 ; 28) et pour la simulation une antenne omnidirectionnelle ou quasi-omnidirectionnelle (4 ; 40) est utilisée.

7. Système (1, 2) selon l'une des revendications **1** à **6,**
**caractérisé**
**en ce qu'**au moins les moyens de détection (22, 21 ; 24, 23) du dispositif répondeur (2) sont exécutés pour être logés dans un système de ceinture portatif.

8. Procédé pour simulation d'un coup de feu en utilisant un système de simulation (1, 2) selon la revendication 1, comportant un dispositif d'interrogation (1) et un dispositif répondeur (2),
**caractérisé**
**en ce que** le dispositif d'interrogation (1) génère des impulsions électromagnétiques ou des paquets d'impulsions qui contiennent une information codée de façon telle que les impulsions de réponse que le dispositif répondeur (2) renvoie au dispositif d'interrogation (1), sur la base de ces informations, sont utilisées à des fins d'identification du dispositif répondeur et en plus pour calculer, à partir de ces impulsions de réponse, la distance entre le dispositif d'interrogation (1) et le dispositif répondeur (2), afin de déterminer à partir de celui-ci des conditions qui existeraient pour le tir en utilisant une munition réelle, les impulsions de réponse étant en plus utilisées pour aussi acquérir par calcul un déplacement possible du dispositif répondeur, et les conditions déterminées comprenant une correction-but et/ou un angle de dérive et/ou un angle balistique.
